# EUROPÄISCHE PATENTANMELDUNG

(11) **EP 0 658 763 A2**
(43) Veröffentlichungstag der Anmeldung: **21.06.1995**
(21) Anmeldenummer: 94119592.7
(22) Anmeldetag: 12.12.1994
(51) Int. Cl.: G01N 27/49

(54) **Verfahren zur quantitativen Bestimmung elektrochemisch reduzierbarer oder oxidierbarer Stoffe, insbesondere von Peroxiessigsäure im Gemisch mit anderen oxidierenden Stoffen**

(30) Priorität: 15.12.1993 DE 4342787
(71) Anmelder: Dr. THIEDIG + CO., D-13357 Berlin (DE)
(72) Erfinder: Teske, Günter, Dr.-Ing., D-12247 Berlin (DE)
(74) Vertreter: Pfenning, Meinig & Partner

(57) **Zusammenfassung**

Es wird ein Verfahren zur quantitativen Bestimmung von oxidierenden und reduzierenden Stoffen auch im Gemisch mit chemisch ähnlich reagierenden Stoffen, insbesondere von Peroxiessigsäure (PES) im Gemisch mit weiteren Stoffen wie Wasserstoffperoxid (H₂O₂) und/oder Essigsäure mittels an und für sich bekannter potentiostatischer Amperometrie beschrieben, bei dem die Bestimmung mit einer Meßelektroden-Spannung vorgenommen wird, die - unabhängig vom vorherrschenden Reaktionsmechanismus - unterhalb des Diffusionsgrenzstromgebietes zwischen der Ruhespannung und dem Wendepunkt der Stromdichte-Spannungskurve liegt. Die PES-Bestimmung erfolgt bei einer Stzromdichte von < 5 %, vorzugsweise < 1 % der Grenzstromdichte.

## Beschreibung

Die Erfindung betrifft ein elektrochemisches, mit konstanter, geregelter Spannung der Meßelektrode geführtes Verfahren zur selektiven Bestimmung insbesondere von Peroxiessigsäure (PES) im Gemisch mit anderen Oxidationsmitteln wie z. B. H₂O₂ sowie anderen Substanzen, eine entsprechende potentiostatische Vorrichtung zur Durchführung des Verfahrens und die Verwendung des Verfahrens zur kontinuierlichen Messung von Peroxiessigsäure enthaltenden Prozeßströmen.

Die strengen Anforderungen an die Qualitätssicherung von Nahrungsmitteln und Getränken (vergl. Mindesthaltbarkeit, "MHD") erfordern u.a. sorgfältigste Verfahrensweisen bei der Reinigung und Desinfektion der entsprechenden Produktions- und Verarbeitungsanlagen, z.B. für Milch, Bier und Soft-Drinks. Zur Wahrung der notwendigen Keimmfreiheit müssen Behälter, Leitungen, Pumpen, Filter und Abfülleinrichtungen regelmäßig mit Reinigungsmitteln (z.B. Säuren und Laugen) und Desinfektionslösungen behandelt werden. Danach müssen diese Anlagen mit reinem Wasser wieder freigespült werden, um unzulässige Produktbelastungen mit schädlichen Fremdstoffen zu vermeiden. Hierzu werden oft CIP-Verfahren ("Cleaning-in-place") in verschiedenen technischen Ausführungsformen eingesetzt. Dabei können die Reinigungs- und Desinfektionslösungen nach Durchlaufen der Anlagen verworfen (meist bei kleineren Systemen) oder zwecks rationeller Wiederverwendung in Stapeltanks zurückgeführt werden. Hier erfolgt dann eine Ergänzung der verbrauchten Wirksubstanzen.

Die Desinfektionsmittel müssen vor Eintritt in die Anlagen die für eine ausreichende Wirksamkeit notwendige Konzentration besitzen. Nützlich kann auch die Kenntnis der Wirksubstanzverluste in den einzelnen Anlagenteilen bzw. im Ablauf sein. Zum rationellen Wasserverbrauch ist die Erfassung des Zeitpunkts der hinreichenden Freispülung der Anlage nützlich. Notwendig ist der Nachweis, daß die eigentlichen Produkte nicht kontaminiert sind. Für eine entsprechende Analytik ist dabei wichtig, welche Desinfektionsmittel eingesetzt wurden, um die komplexe Meßaufgabe zu lösen.

Die Peroxiessigsäure (PES, CH₃COOOH) - im Gemisch mit Wasserstoffperoxid (H₂O₂) und Essigsäure (CH₃COOH) - findet dabei als stark oxidativ wirkendes Desinfektionsmittel in zunehmendem Maße Einsatz. Sie löst somit chlorhaltige Substanzen, quarternäre Ammoniumverbindungen (QAV) oder das kostspielige Ozon ab. Das breite Wirkungsspektrum gegen Mikroorganismen (Bakterien, Pilze, Viren), auch bei niedrigen Temperaturen, das meist problemlose Reduktionsprodukt Essigsäure (CH₃COOOH → CH₃COOH + 1/2 O₂) sowie deren vollständige Abbaubarkeit in biologischen Kläranlagen sind neben dem relativ einfachen Herstellungsverfahren hervorstechende und überzeugend vorteilhafte Eigenschaften.

Auf der Basis von Peroxiessigsäuren kommen Konzentrate mit verschiedenen Wirkstoffkonzentrationen in den Handel. Entsprechend der Herstellung aus hochprozentigem Wasserstoffperoxid und konzentrierter Essigsäure ergeben sich Gleichgewichtskonzentrationen mit einem PES-Anteil zwischen 3% ... 40%. Die Beifügung von Stabilisatoren (oft Phosphonsäuren) bremst die Selbstzersetzung dieser Substanzen.

Einem Teil dieser Handelsprodukte sind auch Mineralsäuren zugesetzt (Schwefelsäure, Salpetersäure). Die Anwendungslösungen zur Desinfektion werden aus diesen Konzentraten durch Verdünnung im Verhältnis 1:100 bis 1:1000 hergestellt. Dadurch entstehen Wirksubstanz-Konzentrationen an PES zwischen 100 ... 2000 ppm (mg/l).

Zur analytischen Erfassung von Peroxiessigsäure-Konzentrationen in diesen Bereichen wird fast ausschließlich ein Titrationsverfahren benutzt. Bei diesem wird zunächst durch Titration mit Kaliumpermanganat-Lösung der Gehalt an H₂O₂ bestimmt und damit beseitigt. Anschließend erfolgt die Titration der PES mit Natriumthiosulfat-Lösungen gegen Jod-Stärke als Indikator. Komplizierte photometrische Bestimmungsmethoden oder die Auswertung von Lumineszenzeffekten sind für die Betriebs-Meßtechnik bei Desinfektionsmaßnahmen zu aufwendig und zu kompliziert.

Die Verwendung von Teststreifen mit Farbindikatoren ist einfach und schnell möglich, verlangt jedoch oft eine Verdünnung, und die Ergebnisse sind oft nicht sehr genau.

Für die kontinuierliche Messung der Peroxiessigsäure, die für deren wirkungssicheren und rationellen Einsatz äußerst wichtig ist, fehlt es bisher an einem geeigneten Verfahren. Lediglich zur Erkennung der Gefahr von Getränkekontaminationen kommen betriebsmäßig Leitfähigkeits-Meßverfahren zur Anwendung, die jedoch den schon oben erwähnten Zusatz von Mineralsäuren zu den eigentlichen Desinfektionsmitteln erforderlich macht.

In der Patentschrift DE 42 23 228 Al wird ein zyklovoltametrisch arbeitendes Verfahren zur Bestimmung von Persäuren neben H₂O₂ beschrieben, bei dem die Potentialdifferenz zweier Elektroden im mittleren Drittel des Doppelschichtbereiches gewählt wird. Durch spannungsdynamisches Vorgehen wird ein kathodisches Maximum des auftretenden Stromsignales ermittelt, das im wesentlichen dem Persäuregehält des Elektrolyten, d.h. der Lösung zugeordnet wird. Die optimale Potentialdifferenz muß zyklovoltametrisch iterativ ermittelt werden.

Hierbei wird die Stromspannungscharakteristik dieser potentiodynamischen, mit hohen Änderungsgeschwindigkeiten für die Spannung im Doppelschichtbereich geführter Methodik überwiegend bestimmt durch kapazitive Ströme und Vorgänge der Adsorption und Desorption, die von Ladungsumsatz begleitet sind.

Zusammenfassend ist deshalb festzustellen, daß bisher noch kein geeignetes Meßverfahren bekannt ist, welches die vorstehend aufgezeigte Meßproblematik, insbesondere durch Angabe eines ständig aktuellen Meßwertes löst.

Der Erfindung liegt demnach die Aufgabe zugrunde, Peroxiessigsäure (PES) bei hohen Überschüssen (bis zu 10-fach und mehr) von anderen Oxidationsmitteln wie H₂O₂ selektiv und kontinuierlich zu messen, insbesondere in einem Konzentrationsbereich von 10 bis 2000 ppm PES.

Die Aufgabe wird in bezug auf das Verfahren durch die kennzeichnenden Merkmale des Anspruches 1 gelöst, hinsichtlich der Vorrichtung zur Durchführung des Verfahrens durch die Kennzeichen des Anspruches 10.

Die Verwendung des Verfahren ist durch Patentanspruch 14 gekennzeichnet. Die Unteransprüche zeigen vorteilhafte Weiterbildungen auf.

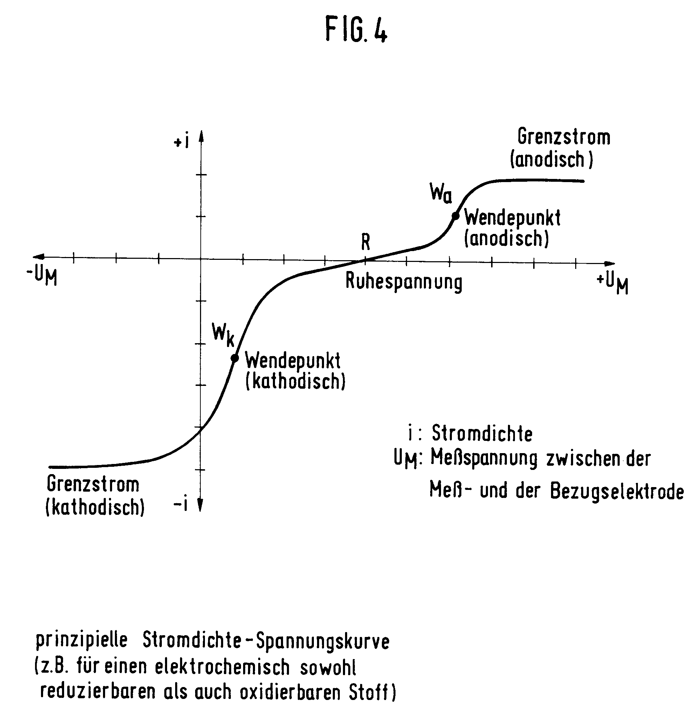

Überraschenderweise und unter Nichtbeachtung der für die elektrochemische Meßtechnik herrschenden Lehrmeinung, wonach eine Konzentrationsbestimmung mittels der potentiostatischen Amperometrie ausschließlich im Diffusions-Grenzstromgebiet erfolgen muß, wurde gefunden, daß auch unterhalb des Grenzstromgebietes, insbesondere bei Meßspannungen, die zwischen der Ruhespannung R (Stromdichte → 0) und dem Wendepunkt Wₖ der Stromdichte-Spannungskurve liegen, quantitative Bestimmungen, z.B. von PES, H₂O₂ und anderen Stoffen reproduzierbar und mit hoher Genauigkeit, d.h. kalibrierfähig möglich sind (vgl. Fig. 4). Dabei werden die an ein kontinuierliches Meßverfahren zu stellenden Bedingungen erfüllt: keine oder nur geringfügige Drift vom Nullpunkt und Meßempfindlichkeit des Sensors, schnelles Ansprechen auf Konzentrationsänderungen, Selektivität und - entscheidend - die kalibrierfähige Abhängigkeit des Meßsignals von der Konzentration der zu bestimmenden Substanz. Unabhängig vom vorherrschenden Reaktionsmechanismus (z.B. durchtrittskontrolliert und/oder reaktionskontrolliert) ist dieser Spannungsbereich bisher für den Fachmann im Hinblick auf amperometrische Zwecke unbrauchbar, da eine Reihe theoretisch belegter Gründe (K. J. Vetter in "Elektrochemische Kinetik", § 48, S. 99 ff) eine stabile Messung von Konzentrationen unmöglich erscheinen läßt. Entgegen dieser verfestigten Lehrmeinung wurde nun festgestellt, daß die Bestimmung von PES - auch bei im Überschuß vorhandenen weiteren Stoffen wie H₂O₂ und/oder Essigsäure - bei einer Stromdichte von < 5 %, vorzugsweise < 1 % der PES-Diffusions-Grenzstromdichte einer frisch aktivierten Meßelektrode möglich ist. Besonders überraschend ist, daß, wenn derart kleine Stromdichten vorliegen, ein stationärer Zustand der Meßelektrode erreicht wird und über einen längeren Zeitraum - mehrere Wochen - die Abhängigkeit der Stromdichte von der PES-Konzentration nahezu konstant und damit kalibrierfähig ist; somit können genaue und reproduzierbare Messungen in diesem Bereich vorgenommen werden. Der hier vorliegende stätionäre Zustand, der potentiostatisch - also bei konstanter Spannung der Meßelektrode - geführt wird, bedingt, daß nur Faraday'sche, mit hier reduzierenden Stoffumwandlungen verbundene Ströme maßgeblich sind. Dieser überraschende und nicht erwartete Befund öffnet nun dieses Gebiet des zwischen Ruhespannung und Wendepunkt liegenden Teiles der stätionären Strom-Spannungskurve für die Lösung der gestellten und anderer Meßaufgaben.

Dieser Befund ist unabhängig von dem in diesem Gebiet vorherrschenden Reaktionsmechanismus und u.a. dadurch gekennzeichnet, daß die Stromdichte fast oder völlig unabhängig ist vom Bewegungszustand des Elektrolyten gegenüber dem Elektrodensystem, andererseits ein starker Temperatureinfluß auf den Stoffumsatz an der Meßelektrode vorliegt (ca. + 15 % pro 1°C bie 20°C).

Nach bevorzugten Ausführungsformen (Anspruch 3 oder 4) wird nun vorgeschlagen, zur Realisierung von derart kleinen Stromdichten die Bestimmung bei Meßspannungen größer 100 mV, besonders bevorzugt bei 150 bis 350 mV, ganz besonders bevorzugt bei um 280 mV gegenüber der Ag/AgCl-Elektrode durchzuführen. Durch eine Anlegung einer derartigen Meßspannung werden nun entsprechende PES-Stromdichten von < 5 %, vorzugsweise < 1 % gegenüber der Grenzstromdichte einer frisch aktivierten Meßelektrode erreicht, wobei die im Überschuß vorhandenen weiteren Stoffe, insbesondere H₂O₂, praktisch keinen Beitrag mehr zur Stromdichte leisten. Dadurch kann die Messung von Peroxiessigsäure selektiv erfolgen.

Das Meßverfahren kann dabei mit an und für sich bekannten potentiostatisch arbeitenden amperometrischen Vorrichtungen durchgeführt werden. Es hat sich dabei als günstig erwiesen, wenn als Meßzelle eine Meßzelle mit drei Elektroden - einer Gegenelektrode, einer Meßelektrode und einer Bezugselektrode - verwendet wird.

Aufgrund des Umstandes, daß reproduzierbare und exakte Meßergebnisse bei derart kleinen PES-Stromdichten erzielt werden können, eignet sich das vorgeschlagene Verfahren besonders zu kontinuierlichen selektiven Konzentrationsmessungen von Peroxiessigsäure im Gemisch mit H₂O₂ sowie von anderen Substanzen auch in Anwesenheit chemisch ähnlich reagierender Stoffe.

Weitere Merkmale, Einzelheiten und Vorzüge der Erfindung ergeben sich aus der folgenden Beschreibung eines Ausführungsbeispieles der Erfindung sowie anhand der Zeichnungen. Hierbei zeigen:
- Fig. 1: den prinzipiellen Aufbau des Meßgerätes "Digox",
- Fig. 2: den Aufbau der Meßzelle,
- Fig. 3: die Meßelektrode "P",
- Fig. 4: die Stromdichte/Spannungskurve, und
- Fig. 5: schematische Darstellung der Meßanordnung.

Zur Durchführung der Messungen wurde ein modifiziertes Gerät des Typs EC 401 S der Firma Dr. Thiedig & Co. verwendet.

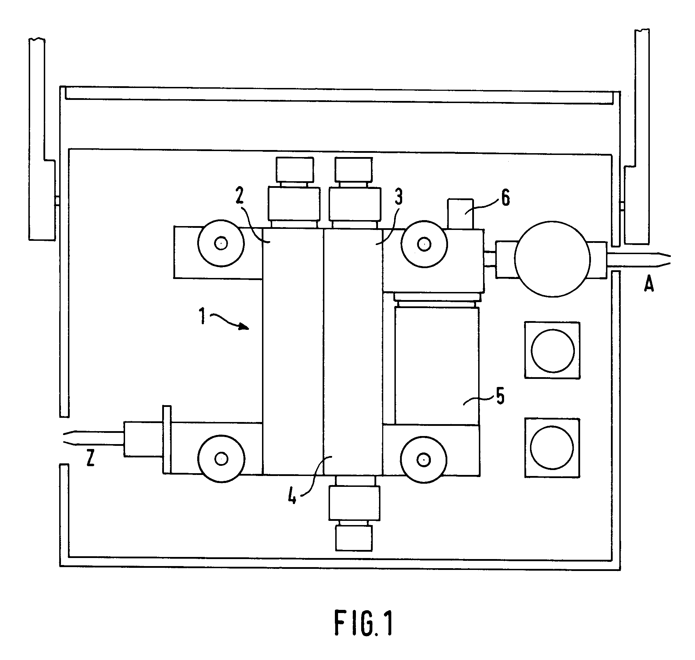

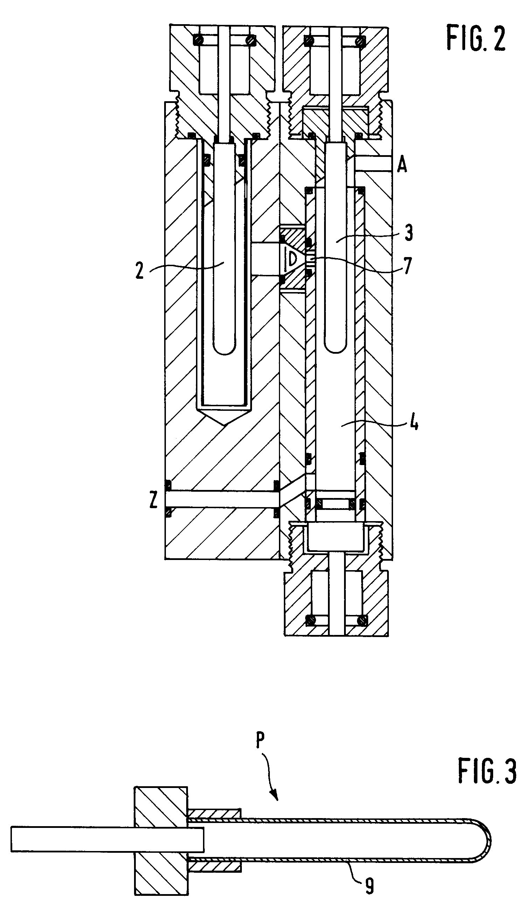

Fig. 1 zeigt dessen prinzipiellen Aufbau. Das Gerät besteht aus einer Meßzelle 1 mit einer Meßelektrode 3, einer Bezugselektrode 2 sowie einer Gegenelektrode 4. Der genaue Aufbau ist im weiteren detailliert aus Fig. 2 zu entnehmen. Die Zuführung des Prozeßstromes erfolgt über die mit Z bezeichnete Zuführung. Der Flüssigkeitsstrom wird dabei durch die Meßzelle 1 geführt und über den Ausgang A weitergeleitet. Das Gerät verfügt weiterhin über einen Temperatursensor 6 sowie über eine Durchflußmeßvorrichtung 5.

Fig. 2 zeigt nun den genauen Aufbau der Meßzelle mit der Meßelektrode 3, der Bezugselektrode 2 sowie der Gegenelektrode 4.

Als bevorzugte Meßelektrode wurde die Meßelektrode P (Fig. 3) eingesetzt mit einer Oberfläche von 8,35 cm². Die Meßelektrode P hat einen massiven Goldmantel 9 und ist über einen Edelstahlkern geschoben; die beiden Materialien sind dabei im Bereich des kurzen PMNA-Tubus verbunden und geklebt.

Für den Einsatz der Meßelektrode P konnte auf die serienmäßige Gegenelektrode aus dem bekannten Seriengerät Digox EC 401 S mit einem Innendurchmesser von 10 mm und das zugehörige Diaphragma zurückgegriffen werden.

Als Bezugselektrode wurde eine Silber-/Silberchlorid-Elektrode verwendet.

Mit der vorstehend beschriebenen Vorrichtung wurden kontiuierliche Messungen von Peroxiessigsäure bei einem 10-fachen Überschuß von H₂O₂ sowie anderen Substanzen vorgenommen. Zum besseren Verständnis der Meßergebnisse wird im folgenden noch auf einige grundsätzliche Gegebenheiten der voltammetrischen und amperometrischen Konzentrationsmeßverfahren hingewiesen.

Wie bereits einleitend ausgeführt, war es bisher nur möglich, innerhalb des Diffusionsgrenzstromgebietes zu messen. Nur hier ist nach bisheriger Lehrmeinung mit Sicherheit die lineare Proportionalität zwischen Meßstrom und Konzentration der Meßkomponente sowie die Langzeitstabilität des Meßsignals gewährleistet. Dieser Grundsatz leitet sich schon aus den Grundlagen der Polarographie her, auf denen alle derartigen Verfahren beruhen. Das spezielle Kennzeichen dieser Meßbedingungen ist eine starke Abhängigkeit des Meßstromes von der relativen Bewegung des Elektrolyten gegenüber der Meßelektrode. Zur Erzielung reproduzierbarer und exakter Meßergebnisse ist die Konstanthaltung der Strömungsverhältnisse an der Elektrode zwingend erforderlich. Es hat sich gezeigt, daß beim Vergleich der Diffusionsgrenzstromgebiete von der Peroxiessigsäure und dem Wasserstoffperoxid nach der Aufnahme der jeweiligen Strom-Spannungskurven eine vollständige Überlagerung in allen pH-Bereichen vorlag. Somit ist es verständlich, daß keine selektive Messung im Diffusionsgrenzstromgebiet von PES erfolgen kann. Zwar liegen in gewissen Gebieten die Stromdichten für die PES, bezogen auf die Konzentration in mg/l, erheblich höher als für gleiche Konzentrationen von H₂O₂, doch ist ja der vorliegende Problemfall dadurch gekennzeichnet, daß das H₂O₂ in wesentlich höheren Konzentrationen (bis zu 10-fach und mehr) als das PES vorliegt. Bei praxisnahen Konzentrationsgegebenheiten verhielten sich demnach die Stromanteile von PES zu H₂O₂ wie 3 : 1 im günstigsten Falle. Unter diesen Umständen ist somit die erforderliche Selektivität für die Erfassung von PES-Konzentrationen nicht gegeben.

Grundsätzlich würden nun verschiedene Möglichkeiten bestehen, diesem Dilemma aus dem Weg zu gehen, indem nämlich H₂O₂ entweder chemisch oder durch andere Verfahren entfernt wird, so daß eine selektive Messung von PES im Grenstromgebiet vorgenommen werden kann.

Es ist das Verdienst der Anmelderin, daß sie nachweisen konnte, daß Spannungsbereiche existieren, bei denen die Stromdichten für die Wasserstoffperoxid-Reduzierung so weit zurückgehen, daß sie gegenüber den Stromdichten für die PES vernachlässigt werden können. Dabei wurde festgestellt, daß bei PES-Stromdichten von unter 1% der Grenzstromdichte die entsprechende Stromdichte für das Wasserstoffperoxid über zwei 10er-Potenzen kleiner war. Diese kam damit schon in die Nähe der Austauschstromdichte.

Tabelle 1 zeigt einen Überblick über die durchgeführten Versuche bei unterschiedlichen Meßspannungen. Tabelle 1 macht deutlich, daß bei Durchführung der Messung bei Meßspannungen > 130 mV, bevorzugt im Bereich von 280 mV, die Meßstromdichte von H₂O₂ vernachlässigbar ist. Insoweit ist bei Meßspannungen zumindest > 100 mV eine zuverlässige reproduzierbare und exakte Messung von Peroxiessigsäure, selbst in Gegenwart von mehr als dem 10-fachen Überschuß an H₂O₂, möglich.

Wenn bei einem Dauereinsatz durch mechanische Verunreinigungen oder sonstige Aktivitätsbeeinflussungen der Meßelektrode die Stromdichte so weit abgesunken sein sollte, daß z.B. bei einer Kalibrierkontrolle die Aussteuerung der Anzeige auf den Sollwert nicht mehr möglich ist, ist eine Aktivierung der Meßelektrode notwendig. Diese kann erfahrungsgemäß durch Polieren mit Schleifleinen, das vorzugsweise mit Eisenoxidpulver beschichtet ist, erfolgen. Bei praktischen Untersuchungen wurde dann festgestellt, daß die Stromdichte einer frisch aktivierten Meßelektrode bei einem relativ hohen Wert lag, der - bei konstanter PES-Konzentration und konstanter Temperatur - im Verlauf von 60 bis 120 h auf einen Wert unter 5 % dieses Anfangsstromes abnahm.

Danach waren weitere Änderungen - wenn überhaupt - nur sehr klein, und es konnte über mehrere Wochen hinweg von einer fast konstanten Stromdichte, also einem stationären Elektrodenzustand ausgegangen werden. Es ließ sich aber zeigen, daß durch geeignete Vorbehandlungsmaßnahmen diese langwierige Abklingphase abgekürzt werden kann. Bewährt hat sich eine Vorpolarisation der Meßelektrode in Lösungen, die 10- bis 30-mal mehr PES enthalten als die Meßlösungen im Maximum. Diese elektrochemische Vorbehandlung wird etwa 0,5 bis 3 h aufrechterhalten. Danach wird die Meßelektrode mit Filtrierpapier trocken poliert und kann dann wieder in das Meßsystem eingesetzt werden. Der stationäre Zustand wird dann erfahrungsgemäß nach 2 bis 10 h erreicht. Die frisch aktivierte Meßelektrode steht somit nach wesentlich kürzerer Zeit, als zunächst zu erwarten war, als kalibrierfähiger Sensor zur Verfügung.

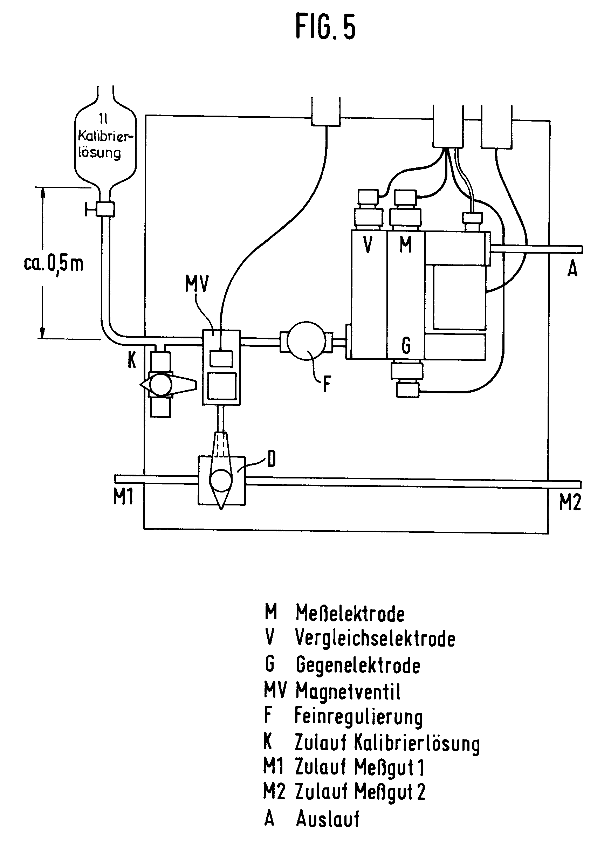

Die Kontrolle der Kalibrierung wird von Zeit zu Zeit durchgeführt, indem (siehe Fig. 5) der Meßzelle MG über ein Magnetventil MV automatisch eine Kalibrierung mit bekannter PES-Konzentration (Sollwert) zugeführt wird. Die sich am nicht dargestellten Display ergebende Anzeige wird über einen Mikroprozessor auf den zuvor eingegebenen Sollwert abgeglichen. Hierdurch werden eventuelle Änderungen der Meßempfindlichkeit korrigiert.

Das Verfahren zeichnet sich besonders dadurch aus, daß es kontinuierlich eingesetzt werden kann. Besonders bevorzugt ist die Anwendung dieses Verfahrens zur Bestimmung von Peroxiessigsäure in Desinfektionsmitteln in den vorstehend beschriebenen Mischungen, insbesondere mit H₂O₂ und Essigsäure.

**Tabelle 1**

| Meß-Spannung | Meßstrom-Dichte PES µA/cm² je 100 ppm | Meßstrom-Dichte H₂O₂ µA/cm² je 100 ppm | Meßstromanteil bei einem Verhältnis PES:H₂O₂ 1:1 | Meßstromanteil bei einem Verhältnis PES:H₂O₂ 1:10 | Meßstromanteil bei einem Verhältnis PES:H₂O₂ 1:100 |
|---|---|---|---|---|---|
| +70 | 440 | 140 | 75:25 | 24:76 | 3:97 |
| +130 | 1,51 | 0,024 | 98:2 | 86:14 | 39:61 |
| +280 | 0,08 = 0,01 | 0,0008 = 0,0001 | 99:1 | 92:8 | 54:46 |

## Patentansprüche

1. Verfahren zur quantitativen Bestimmung von oxidierenden und reduzierenden Stoffen auch im Gemisch mit chemisch ähnlich reagierenden Stoffen, insbesondere von Peroxiessigsäure (PES) im Gemisch mit weiteren Stoffen wie Wasserstoffperoxid (H₂O₂) und/oder Essigsäure mittels an und für sich bekannter potentiostatischer Amperometrie,
dadurch **gekennzeichnet**,
daß die Bestimmung mit einer Meßelektroden-Spannung vorgenommen wird, die - unabhängig vom vorherrschenden Reaktionsmechanismus - unterhalb des Diffusionsgrenzstromgebietes zwischen der Ruhespannung (R) und dem Wendepunkt (Wₖ, Wₐ) der Stromdichte-Spannungskurve liegt (siehe Fig. 4).

2. Verfahren nach Anspruch 1,
dadurch gekennzeichnet, daß die PES-Bestimmung bei einer Stromdichte von < 5 %, vorzugsweise < 1 % der Grenzstromdichte erfolgt.

3. Verfahren nach Anspruch 1 oder 2,
dadurch gekennzeichnet, daß die Bestimmung bei einer Meßspannung > 100 mV - gegenüber der Silber-/Silberchlorid-Elektrode (Ag/AgCl) gemessen - erfolgt.

4. Verfahren nach mindestens einem der Ansprüche 1 bis 3,
dadurch gekennzeichnet, daß die Bestimmung bei einer Meßspannung im Bereich von 150 bis 350 mV, bevorzugt bei 260 bis 340 mV, gemessen gegen die Silber-/Silberchlorid-Elektrode, erfolgt.

5. Verfahren nach mindestens einem der Ansprüche 1 bis 4,
dadurch gekennzeichnet, daß bei sich stark änderndem pH-Wert die sich dadurch ergebende Änderung der Meßstromdichte durch automatische Nachkalibrierung oder entsprechende Anpassung der Meßspannung kompensiert wird.

6. Verfahren nach mindestens einem der Ansprüche 1 bis 5,
dadurch gekennzeichnet, daß die Bestimmung in einem Temperaturbereich von 0° bis 30°C durchgeführt und der Temperaturgang der Meßstromdichte automatisch kompensiert wird.

7. Verfahren nach mindestens einem der Ansprüche 1 bis 6,
dadurch gekennzeichnet, daß die Bestimmung kontinuierlich in einem PES enthaltenden Prozeßstrom erfolgt.

8. Verfahren nach wenigstens einem der Ansprüche 1 bis 7,
dadurch gekennzeichnet, daß die Meßelektrode durch Polieren mit vorzugsweise Eisenoxid-beschichtetem Schleifleinen aktiviert wird.

9. Verfahren nach wenigstens einem der Ansprüche 1 bis 8,
dadurch gekennzeichnet, daß die Meßelektrode zwecks Beschleunigung der Einstellung auf den stationären Zustand zunächst einer kurzzeitigen, vorzugsweise 0,5 bis 3 h währenden Vorpolarisation unterzogen wird in einer Lösung der zu bestimmenden Substanz mit vielfach höherer, vorzugsweise 10- bis 30-facher Konzentration als der maximal zu bestimmenden, und abschließend mit Filtrierpapier trocken poliert wird.

10. Vorrichtung zur Durchführung des Verfahrens nach Anspruch 1 bis 9,
dadurch **gekennzeichnet**,
daß die Meßzelle (1) eine potentiostatisch arbeitende 3-Elektroden-Anordnung aufweist mit einer Gegenelektrode (4), einer Meßelektrode (3) und einer Bezugselektrode (2) hinter einem Diaphragma (7).

11. Vorrichtung nach Anspruch 10,
dadurch gekennzeichnet, daß die Meßelektrode (3) eine Edelmetall-Elektrode, zur PES-Bestimmung vorzugsweise eine Goldelektrode, ist.

12. Vorrichtung nach Anspruch 10 oder 11,
dadurch gekennzeichnet, daß die Bezugselektrode (2) eine Silber-/Silberchlorid-Elektrode ist.

13. Vorrichtung nach mindestens einem der Ansprüche 10 bis 12,
dadurch gekennzeichnet, daß das Diaphragma (7) ein Ton-Diaphragma ist.

14. Verwendung des Verfahrens nach mindestens einem der Patentansprüche 1 bis 10 zur kontinuierlichen Bestimmung von im Desinfektionsmittel enthaltener PES im Gemisch mit anderen Stoffen wie Wasserstoffperoxid.
